# EUROPÄISCHE PATENTSCHRIFT

(11) **EP 3 234 544 B1**
(45) Veröffentlichungstag und Bekanntmachung des Hinweises auf die Patenterteilung: **19.09.2018**
(21) Anmeldenummer: 15825927.5
(22) Anmeldetag: 17.12.2015
(51) Int. Cl.: G01N 1/22, G01N 15/06, G01N 15/00, G01N 5/02, C12M 1/26, C12M 1/12, G01N 33/00, B01D 45/08

(54) **VORRICHTUNG ZUR MESSUNG VON FEINSTPARTIKELMASSEN**
DEVICE FOR MEASURING SUPERFINE PARTICLE MASSES
DISPOSITIF POUR MESURER DES MASSES DE PARTICULES FINES

(30) Priorität: 17.12.2014 DE 102014118846
(43) Veröffentlichungstag der Anmeldung: 25.10.2017
(73) Patentinhaber: Karlsruher Institut für Technologie, 76131 Karlsruhe (DE)
(72) Erfinder: PAUR, Hanns, Rudoll, 76139 Karlsruhe (DE); MÜLHOPT, Sonja, 76137 Karlsruhe (DE); SCHLAGER, Christoph, 76287 Rheinstetten (DE)
(86) Internationale Anmeldenummer: PCT/EP2015/002546
(87) Internationale Veröffentlichungsnummer: WO 2016/096137

(56) Entgegenhaltungen:
- DE-A1-102007 013 938
- MELANIE SAVI ET AL: "A Novel Exposure System for the Efficient and Controlled Deposition of Aerosol Particles onto Cell Cultures", ENVIRONMENTAL SCIENCE & TECHNOLOGY, Bd. 42, Nr. 15, 1. August 2008 (2008-08-01), Seiten 5667-5674, XP055266199, US ISSN: 0013-936X, DOI: 10.1021/es703075q in der Anmeldung erwähnt

## Beschreibung

Die Erfindung betrifft eine Vorrichtung zur Messung von Feinstpartikelmassen, beispielsweise auf einem Bioassay gemäß dem ersten Patentanspruch.

Vorrichtungen der eingangs genannten Art dienen der Erfassung und / oder Analyse von Immissionen aus Aerosolen oder Stäuben allgemein. Zunächst interessieren dabei die rein physikalischen Ablagerungskinetiken auf bestimmten Oberflächen (Depositionsflächen) durch Adsorption. Dabei können Substanzen aus den Aerosolen oder Stäuben auch in die Oberfläche eindiffundieren, d.h. im Rahmen eines physikalischen Diffusionsprozess aufgenommen und eingelagert werden (Absorption). Auch chemische und physikalische Wechselwirkungen der Feinstpartikel auf oder in den Depositionsflächen lassen sich anhand dieser Vorrichtungen erfassen und durch zusätzliche morphologische, physikalische oder chemische Analysemethoden bekannter Art quantifizieren.

Ein wichtiges Einsatzfeld der vorgenannten Vorrichtungen sind auch In-Vitro-Analysen von Feinstaubablagerungen oder biochemischen oder biophysikalischen Wechselwirkungen auf Bioassays, d.h. auf biologischen oder biologisch aktiven Oberflächen. Insbesondere für eine toxikologische Bewertung von atmosphärischen Staub- und Schadstoffbelastungen beispielsweise an belasteten Arbeitsplätzen, im Verkehr oder in Industrieanlagen stellen derartige Analysen eine sinnvolle und aus ethischen Erwägungen zu bevorzugende Ergänzung zu epidemiologischen Untersuchungen (mit statistischen Daten) oder in-vivo-Analysen an lebenden Individuen (z.B. mit Tierversuchen) dar.

Einer besonderen Bedeutung kommt die Immissionsanalyse bei sog. Feinstpartikelbelastungen zu. Als Feinstpartikel, zu denen auch Nanoteilchen oder Nanopartikel gehören, bezeichnet man Partikel mit Durchmessern unter 10µm, d.h. von wenigen Nanometern bis maximal einem Mikrometer. In der **DIN ISO/TS 27687** sind beispielsweise Feinstaub (z.B. PM10 = Partikeldurchmesser kleiner 10µm) sowie Ultrafeinstaub normiert: ein Nanopartikel ist demzufolge ein Nanoobjekt mit allen drei Außenmaßen im Nanomaßstab von 1 bis 100nm. Mit einem sehr großen Verhältnis von Oberfläche zu Masse weisen Feinstpartikel gegenüber größeren Partikeln oder Festkörpern oftmals ein vollkommen anderes und noch nicht vollständig untersuchtes und damit unbekanntes Eigenschaftsprofil und Reaktionsverhalten auf.

DE 100 61 976 A1 offenbart eine Vorrichtung zur Messung von Feinstpartikelmassen, umfassend ein Expositionssystem mit einer Messkammer mit einer Depositionsfläche für Partikel auf einem Schwingquarz mit je einer auf diese gerichtete Aerosolzuführung für die Zuführung eines Aerosols auf die Depositionsfläche.

In-Vitro-Untersuchungen zur Messung von Feinstpartikelmassen sowie deren toxikologischen Auswirkungen auf lebende Organismen nutzen oft biologische Modellstrukturen wie z.B. Zellkulturen auf einer entsprechenden Kultivierungsträgerstruktur wie z.B. einer Petrischale oder bei Bakterienkulturen einem Nährboden oder Membran-Kultur-Einsätze mit Poren zum unteren Kompartiment. Die Strukturen werden als offen liegende Schicht dem Aerosol oder einer Suspension aus einem Trägerfluid (Gas bzw. Flüssigkeit) und den Feinstpartikeln ausgesetzt.

Aus der DE 198 01 763 C2 ist eine Kulturvorrichtung für die Kultivierung von Zellen oder Gewebekomponenten bekannt, bei dem die Zellkulturen auf porösen Membranen in Kultureinsätze gezüchtet werden. Für die vorgenannten In-Vitro-Untersuchungen wird die Nährlösung auf der oberen Seite der planen Kulturen für die Beaufschlagung mit einem Aerosol entfernt, während der Raum unterhalb der Membran zum Zwecke der Zellversorgung und der Vermeidung einer Kumulierung von toxischen Stoffwechselprodukten kontinuierlich mit frischen Nährmedium gespült wird. Das System etablierte sich bereits in vielen Bereichen der Inhalationsforschung, wie z.B. zur Untersuchung von Dieselruß und Zigarettenrauch.

Auch die EP 1 174 496 A1 offenbart eine Vorrichtung zur Kultivierung biologischer Kulturen mit einem gasförmigen Fluid auf der Oberseite und einer Flüssigkeit auf der Unterseite kombiniert mit einer rechnerische Dosisbestimmung.

Die bislang bekannten In-Vitro-Untersuchungen stützen sich jedoch ausschließlich auf zeitintegrale Messungen. Die Zellkulturen werden wie auch die genannten In-Vivo-Untersuchungen intervallweise, d.h. erst nach Ablauf einer bestimmten Versuchsdauer untersucht. Schwankungen in einer Aerosolimmission und deren temporäre biochemischen Auswirkungen auf eine Zellkultur können oft nicht oder beispielsweise anhand von Einzelversuchen nur sehr ungenau nachvollzogen werden.

Aus der DE 10 2007 013 938 A1 ist zudem eine Vorrichtung zur Messung von Feinstpartikelmassen bekannt, bei der ein Expositionssystem mit mindestens zwei Messkammern mit jeweils einer Depositionsfläche mit identischen Geometrien und jeweils eine auf diese gerichtete Aerosolzuführung vorgesehen ist. Dabei ist mindestens eine der Depositionsflächen auf einem Schwingquarz als Feinstwaage und andere Depositionsflächen ohne Schwingquarz konzipiert. Ferner wird zur Erhöhung der Abscheidungseffizienz ein elektrisches Feld zwischen Aerosolzuführung und Depositionsfläche vorgeschlagen, wobei empfohlen wird, den elektrischen Potentialunterschied zwischen ggf. ionisierten Feinstpartikeln im Aerosol und der Aerosolzuführung möglichst gering gehalten werden.

Ferner bietet die Firma **Cultex** Laboratories GmbH, Hannover ein Kulturkammer an, bei der ein Aerosol eingangsseitig durch eine Corona aufgeladen und auf Zellkulturen mit angelegten elektrischen Potential geleitet wird (http://www.cultex-laboratories.com/wp-content/uploads/2014/02/psp-cultex-systems.pdf; Stand: 18.08.2014).

Auch in **Savi et al.** *(*Savi M., Kalberer M., Lang D., Ryser M., Fierz M., Gaschen A., Rička J., Geiser M.; A novel exposure system for the efficient and controlled deposition of aerosol particles onto cell cultures; Environmental Science and Technology 42 (2008) 5667-5674*)* wird ein solches Konzept beschrieben, wobei ein passives Gitter über der Depositionsfläche zur Homogeniserung des elektrischen Feldes vorgeschlagen wird.

Bisher sind folglich nur Vorrichtungen zur Messung von Feinstpartikelmassen mit elektrostatischer Abscheidung bekannt, bei denen die Depositionsfläche als Elektrode auf einem Spannungsniveau (vorzugsweise Hochspannung im kV-Bereich) steht. Ist diese als Feinstwaage für eine QCM-Messung (QCM = Quartz Crystal Microbalance) mit einem Schwingquarz ausgestattet, muss eine Ansteuerung der Feinstwaage nachteilhaft auch auf dem genannten Spannungsniveau erfolgen. Das genannte Spannungsniveau wird hierzu an die oben liegende Messelektrode des Schwingquarzes angelegt und entspricht damit dem Potential an der Zellkultur. Um die QCM-Messung, deren Prinzip auf der Änderung der Eigenfrequenz im angeregten Schwingquarze basiert, nicht maßgeblich zu verändern, sollte die nötige Spannungsdifferenz von wenigen Volt zwischen Mess- und der zweiten Ringelektrode des Schwingquarzes insgesamt um die 1000 Volt angehoben werden, also die Ringelektrode auf 1000 Volt und die Messelektrode auf z.B. 1010 Volt. Jedoch sind für die Realisierung eines solchen Konzepts neue Oszillatoren und eine aufwendige komplexe Frequenzanalyse erforderlich.

Feinststaub oder Nanopartikel zeichnen sich durch eine große spezifische Oberfläche aus. Dies begünstigt signifikant eine starke Haftung dieser Partikel an ebene Oberflächen, wie die genannten Depositionsflächen überwiegend mittels van-der-Waals-Kräften. Weitere Haftungsmechanismen wie z.B. Verklebungen oder Oberflächenspannungseffekte können zusätzlich einwirken, treten jedoch in den Hintergrund und sind bei Feinstäuben oder Nanopartikel im vorliegenden Fall vernachlässigbar.

Daher liegt die **Aufgabe der Erfindung** darin, die letztgenannte Vorrichtung zur Messung von Feinstpartikelmassen weiter zu verbessern.

Diese Aufgabe wird durch die kennzeichnenden Merkmale in Anspruch 1 gelöst; die hierauf bezogenen Unteransprüche beinhalten vorteilhafte Ausführungsformen dieser Lösung.

Die Erfindung betrifft eine Vorrichtung zur Messung von Feinstpartikelmassen, konzipiert für Untersuchungen zur Immission von Feinstpartikeln auf Depositionsflächen, beispielsweise über Sedimentation, Diffusion, Ad- oder Absorption oder sonstige physikalische oder chemische Anbindung.

Es wird eine Vorrichtung zur Messung von Feinstpartikelmassen in Expositionskammern jeweils mit einer Aerosolzuführung und einer Depositionsfläche vorgeschlagen, bei dem für eine elektrostatisch unterstützte Abscheidung ein elektrisches Feld in der Expositionskammer aufgespannt wird. Wesentlich ist, dass die Depositionsflächen eine Feldelektrode bilden und an den Depositionsflächen jeweils ein Potential von maximal 50 Volt zum Erdpotential anliegt. Dieser Ansatz weist gegenüber bekannten Lösungen folgende Vorteile auf:
- Spannungsniveau nahe dem Erdpotential auf Depositionsfläche und am Schwingquarz
- Keine aufwendige Elektronik und Datenerfassung erforderlich

Die Lösung der Aufgabe basiert auf einer Vorrichtung zur Messung von Feinstpartikelmassen, wie sie im Wesentlichen in der DE 10 2007 013 938 A1 beschrieben ist. Sie umfasst ein Expositionssystem mit mindestens zwei Messkammern (Expositionskammern) mit identischen Geometrien, umfassend jeweils eine Depositionsfläche für Partikel mit je einer auf diese gerichtete Aerosolzuführung mit einem Auslassbereich für die Zuführung eines Aerosols auf die Depositionsfläche. Dabei ist mindestens eine der Depositionsflächen auf einem Schwingquarz als Feinstwaage ausgeführt. Dabei ist die mindestens eine Depositionsfläche auf einem Schwingquarz aufgesetzt oder auf einer anderen Weise mit einem Schwingquarz direkt oder über einen wellenleitende Komponente verbunden.

Eine Ausgestaltung sieht ferner vor, mindestens eine der Depositionsflächen ohne, d.h. nicht auf einem Schwingquarz anzuordnen oder mit einem solchen zu verbinden, sodass diese keine Feinstwaage darstellt. Die Vorrichtung weist somit Depositionsflächen mit und ohne Schwingquarz auf.

Eine weitere Ausgestaltung sieht vor, genau nur eine der Depositionsflächen auf einem Schwingquarz aufzusetzen oder mit einem Schwingquarz in vorgenannter Weise zu verbinden, während alle anderen Depositionsflächen keinen Schwingquarz aufweisen.

Eine weitere Ausgestaltung sieht vor, alle Depositionsflächen auf jeweils einem Schwingquarz als Feinstwaagen auszuführen. Diese Form ermöglicht zudem vergleichende Massenbestimmungen auf den schwingenden Depositionsflächen und damit auch ein frühzeitiges Erkennen von fehlerhaften Expositionskammern (Qualitätsüberwachung) .

Als Feinstwaage konzipiert nimmt eine Depositionsfläche mit Schwingquarz gegenüber anderen Depositionsflächen, ohne Schwingquarz keine andere abweichende Lage in der Expositionskammer ein. Damit ist in vorteilhafter Weise nicht nur während einer Versuchszeitdauer eine Massenbestimmung der an die Depositionsfläche angebundenen Feinstpartikelmassen möglich, sondern aufgrund der identischen Anordnungen in den Expositionskammerri und damit aufgrund einer auszugehenden Übertragbarkeit auf die anderen Expositionskammern mit identischen Geometrien auch die Abschätzung der Feinstpartikelmassen auf den übrigen Depositionsflächen.

Die Massenbestimmung kann dabei mit den als Feinstwaage konzipierten Depositionsflächen während der Versuchszeitdauer ununterbrochen laufend oder als eine oder mehrere Einzelmessungen erfolgen, wobei die Ansteuerung und die Datenerfassung des Schwingquarzes vorzugsweise Computergesteuert erfolgen.

Es sind folglich Erfassungsmittel oder Verfahrensschritte vorgesehen, die eine Immission der Partikel auf Depositionsflächen nicht nur integral, sondern auch zeitaufgelöst erfassen. Die abgeschiedene Menge an imitierten Partikeln wird dabei, laufend und vorzugsweise auch quantitativ erfasst. Der Verlauf einer Deposition kann damit on-line überwacht werden. Der damit erzielbare Vorteil einer derartigen On-Line-Erfassung liegt nicht nur in der zeitnahen Erfassung der Partikelabscheidung auf den Depositionsflächen, sondern auch in der zeitnahen Verarbeitung dieser Abscheidungsraten als Messgrößen für versuchstechnische Steuerungsbefehle z.B. für Versuchsführungsmanipulationen, Alarmsysteme oder für ergänzende Messungen wie auch für sicherheitsrelevante Maßnahmen.

Die Abscheidungseffizienz auf den Depositionsflächen lässt sich in vorteilhafter Weise durch Mittel zur Erzeugung eines Potentialunterschieds zwischen den Partikeln im Gas und den Depositionsflächen beeinflussen.

Ein wesentliches Merkmal umfasst die Ausgestaltung dieser letztgenannten Mittel. Dabei wird vorgeschlagen, an die Depositionsflächen jeweils ein einheitliches Potential von maximal 50 Volt, vorzugsweise maximal 20 Volt, weiter bevorzugt 10 Volt zum Erdpotential anzulegen. Weiter bevorzugt sind die Depositionsflächen direkt mit dem Erdpotential verbunden (auf Erde gelegt, Nulleiter). Vorzugsweise befindet sich die Depositionsfläche auf einer Elektrode oder wird durch die Elektrode selbst gebildet. Sie bildet eine Messelektrode, an der das genannte einheitliche Potential, vorzugsweise das Erdpotential anliegt. Die Messelektrode dient in einer Ausgestaltung zugleich als eine der beiden Ansteuerungselektroden zur Anregung des Schwingquarzes. Im Rahmen einer Ausgestaltung ist die Messelektrode als Ringelektrode um die Depositionsfläche angeordnet.

Weiterhin wird optional vorgeschlagen, die Depositionsflächen elektrisch miteinander zu verbinden, um ein gemeinsames Potential auf den Depositionsflächen sicherzustellen.

Das vorgenannte wesentliche Merkmal umfasst zudem je ein Gitter pro Depositionsfläche, die über den jeweiligen Depositionsflächen angeordnet sind. An den Gittern liegt jeweils ein Potential mit einem Potentialunterschied von mindestens 200 Volt, vorzugsweise zwischen 500 und 10000 Volt und weiter bevorzugt zwischen 1000 und 5000 Volt zum Potential der Depositionsflächen an, wobei zwischen den Gittern und den jeweiligen Depositionsflächen sich ein elektrisches Feld aufspannt.

Das Gitter hat über die gesamte Fläche vorzugsweise eine gleiche Maschenweite (vorzugsweise zwischen 0,5 und 10mm, weiter bevorzugt zwischen 1 und 5mm) sowie eine konstante Stegbreite.

Eine Ausgestaltung sieht eine elektrische Isolierung zwischen Aerosolzuführung und Gitter vor. Alternativ besteht die Aerosolzuführung oder zumindest die Kontaktfläche zum Aerosol aus einem elektrisch nicht leitenden Material bzw. einer elektrisch nicht leitenden Beschichtung. Dabei wird das Gitter bevorzugt über eine Kabelverbindung mit dem vorgenannten Potentialunterschied beaufschlagt. Wenn an dem Gitter eine positive Spannung anliegt werden sich zwar negative geladene Partikeln sich bevorzugt an der Kontaktfläche und/oder dem.Gitter abscheiden. Dem gegenüber werden die positiv geladenen Partikel vermehrt zu den Depositionsflächen geleitet, sodass insgesamt eine Dosissteigerung erzielbar ist.

Eine alternative Ausgestaltung sieht eine Aerosolzuführung zumindest mit einer elektrisch leitfähigen Kontaktfläche zum Aerosol hin ohne die vorgenannte Isolierung vor. Das Gitter und die Aerosolzuführung weisen damit dasselbe elektrische Potential auf und werden vorzugsweise gegenüber den umliegenden Komponenten der Vorrichtung durch eine elektrisch nichtleitende Komponente (Isolierung oder elektrisch nichtleitende Komponente der Aerosolzuführung) elektrisch isoliert.

Durch die vorgenannte Ausgestaltung von Depositionsflächen und Gitter ermöglicht die Aufspannung des genannten elektrischen Feldes und zugleich eine besonders vorteilhafte elektrische Entkopplung der Schwingquarze von höheren Spannungen, vorzugsweise der genannten an den Gittern anliegenden Potentiale oder Potentialunterschiede zu den Depositionsflächen. Eine direkte Ankppplung der Depositionsflächen an das Erdpotential ermöglicht zudem eine direkte Ableitung von eventuellen Spannungsimpulsen und damit eine zusätzliche Sicherung gegenüber Störspannungen.

Zur Erzeugung vorteilhafter gleicher oder ähnlicher Abscheidungsbedingungen und damit Abscheidungskinetikenüber die gesamte. Depositionsfläche überspannten die Gitter die jeweiligen Auslassbereiche vorzugsweise vollständig und/oder parallel zu den Depostionsflächen.

Der Abstand, zwischen Depositionsfläche und Gitter beträgt zwischen 0,5 und 10 mm, vorzugsweise zwischen 1 und 3 mm, (ideal wären 1mm, bei 2 - 3mm ist jedoch eine verbesserte Kurzschlussfestigkeit erzielbar) womit sich bei den vorgenannten Potentialdifferenzen von eine-bevorzugte elektrische Feldstärke von 300 - 700 V/cm einstellt.

Eine weitere Ausgestaltung sieht Mittel oder Verfahrensschritte zur Ionisierung dieser Feinstpartikelmassen im Aerosol vor, vorzugsweise schon vor Eintritt in die Aerosolzuführung. Die Ionisierung erfolgt vorzugsweise elektrisch oder photonisch, in einzelnen Fällen auch radioaktiv, wobei die Ionisierung durch dem Aerosol hinzuzufügende z.B. als Ladungsüberträger wirkende Additive selektiv gesteuert oder beschleunigt werden kann. Um ein vorzeitiges Abscheiden von Feinstpartikeln z.B. in der Aerosolzuführung zu vermeiden sollte der elektrische Potentialunterschied zwischen ionisierten Feinstpartikeln im Aerosolund der Aerosolzuführung möglichst gering gehalten werden. Zur Erhöhung der Abscheidungsraten der ionisierten Partikel auf den Depositonsflächen wird dann zwischen diesen und dem Auslassbereich der Aerosolzuführung, d.h. bevorzugt im Ringspalt ein elektrisches Feld eingestellt.

Setzen sich die Feinstpartikelmassen aus mehreren unterschiedlichen Partikelfraktionen zusammen, lassen sie sich beispielsweise durch die vorgenannte selektive Ionisierung auf zwei verschiedene Weisen trennen. Einerseits lassen sich selektiv ionisierte Partikelfraktionen in einem elektrischen Feld vor Eintritt in die Vorrichtung abscheiden, andererseits lässt sich durch eine Anlegung des vorgenannten elektrischen. Feldes zwischen Depositionsfläche und Auslassbereich eine Abscheidung der ionisierten Partikelfaktionen selektiv signifikant erhöhen.

Bei den vorgenannten Messkammern (Expositionskammern) mit identischen Geometrien sind die Depositionsflächen jedoch nicht nur geometrisch, sondern vorzugsweise auch in ihren Oberflächenmaterialien identisch. Weiter bevorzugt weisen die Messkammern jeweils identische Aerosolzuführungen auf die Depositionsflächen, weiter bevorzugt auch identische Absaugungen auf. Dabei wird vorausgesetzt, dass jede dieser identischen Aerosolzuführung von derselben Feinstpartikelquelle versorgt wird. Ziel dieser Ausgestaltungen ist eine vergleichbare und möglichst identische Ablagerungen gleicher Feinstpartikelmengen auf jeder der Depositionsflächen.

Weisen die Expositionskammern untereinander z.B. geometrische oder strömungstechnische Unterschiede auf, ist eine grundsätzliche Übertragbarkeit der Abscheidungen dennoch gegeben. Dabei können Abweichungen der Messergebnisse und damit Messfehler sofern erforderlich, mit bevorzugt empirisch an Vergleichsversuchen ermittelten fixen Korrekturfaktoren oder variablen Korrekturfunktionen (Korrelationsbeziehungen) minimiert bzw. korrigiert werden.

Die genannten Maßnahmen ermöglichen in vorteilhafter Weise eine online-Erfassung der abgelagerten realen Feinstpartikelmassen direkt im Expositionssystem. Zusätzliche Messeinheiten werden nicht benötigt. Umrechnungsalgorithmen oder Modellbetrachtungen scheiden damit als Quellen für Ungenauigkeiten oder Fehlerquellen aus. Durch die Nutzung eines direkten Messkonzepts ist die Vorrichtung damit besonders zuverlässig, einfach aufgebaut und damit kostengünstig. Eine chemische oder radioaktive Markierung des Aerosols oder der Feinstpartikel zwecks, eines quantitativen Nachweises ist nicht erforderlich.

Die Erfindung sowie Ausgestaltungen dieser werden beispielhaft anhand von Ausführungsformen und folgenden Figuren näher erläutert. Es zeigen
**Fig.1** eine Aufsicht einer Ausführungsform mit sechs Expositionskammern,
**Fig.2** eine Schnittdarstellung der Vorrichtung (gemäß **Fig.1** an der mit **A - A** gekennzeichneten Linie),
**Fig.3a** **und b** je eine Schnittdarstellung einer möglichen Ausführung einer Expositionskammer mit Depositionsfläche, einer Aerosolzuführung mit Gitter, wobei nur das Gitter unter Spannung steht,
**Fig.4** eine Schnittdarstellung einer Ausgestaltung einer Aerosolzufürhung mit Gitter, wobei nur das Gitter unter Spannung steht sowie
**Fig.5a** **und b** je eine Schnittdarstellung einer weiteren möglichen Ausführung einer Expositionskammer mit Depositionsfläche, einer Aerosolzuführung mit Gitter, wobei das Gitter und die Aerosolzuführung unter Spannung stehen.

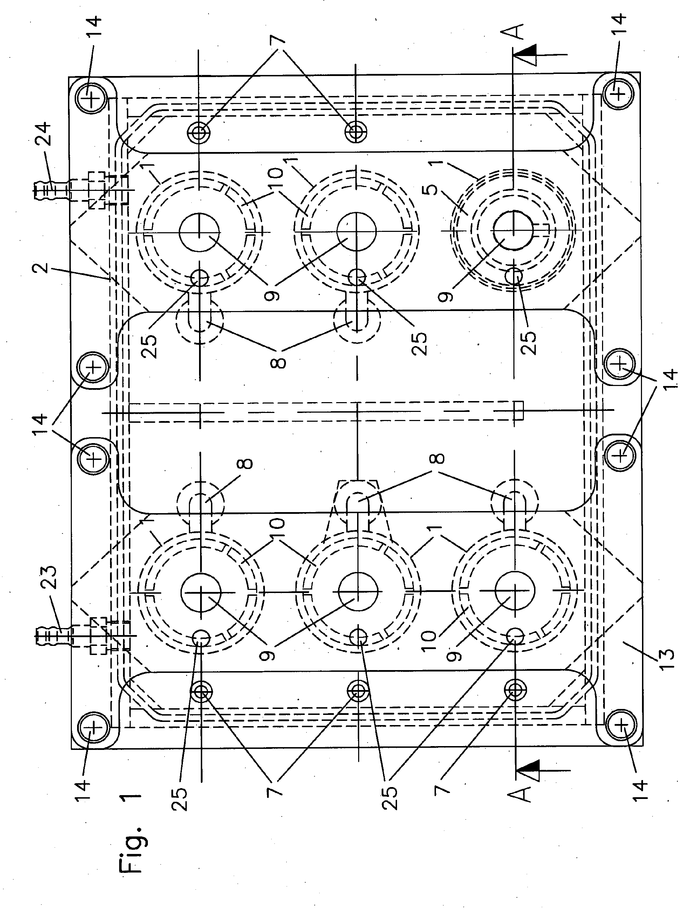

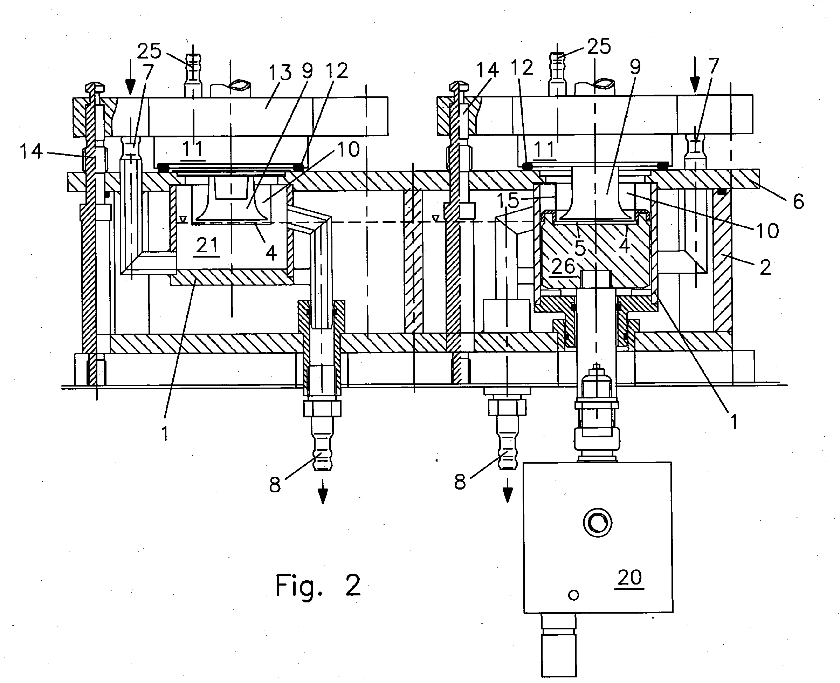

**Fig.1** zeigt eine beispielhafte Anordnung von sechs Expositionskammern **1** zur Durchströmung eines Aerosols in einem gemeinsamen Gehäuse **2** auf. Die Geometrien der Durchströmungsvolumina für das Aerosol sind bei allen sechs Expositionskammern vorzugsweise identisch. Im Beispiel sind fünf der sechs Expositionskammern mit je einem Transwelleinsatz **3** als Depositionsfläche **4** (Zellkulturoberfläche z.B. auf einer Polycarbonatmembran) ausgestattet, während in der sechsten Expositionskammer die Depositionsfläche **4** auf einen Schwingquarz **5** als Messaufnehmer einer Quarzmikrowaage angeordnet ist. Vorzugsweise wird-die Depositionsfläche durch die Oberfläche oder die Elektrode des Schwingquarzes direkt gebildet. Ferner findet sich in **Fig.1** eine mit **A - A** gekennzeichnete Linie als Schnittebene für die Darstellung gem. **Fig.2****.**

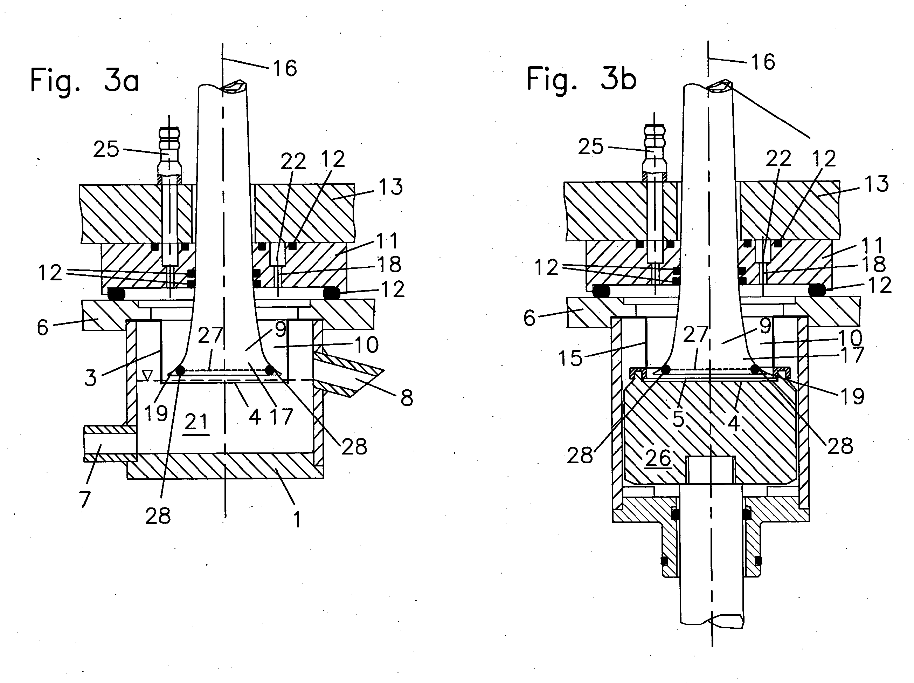

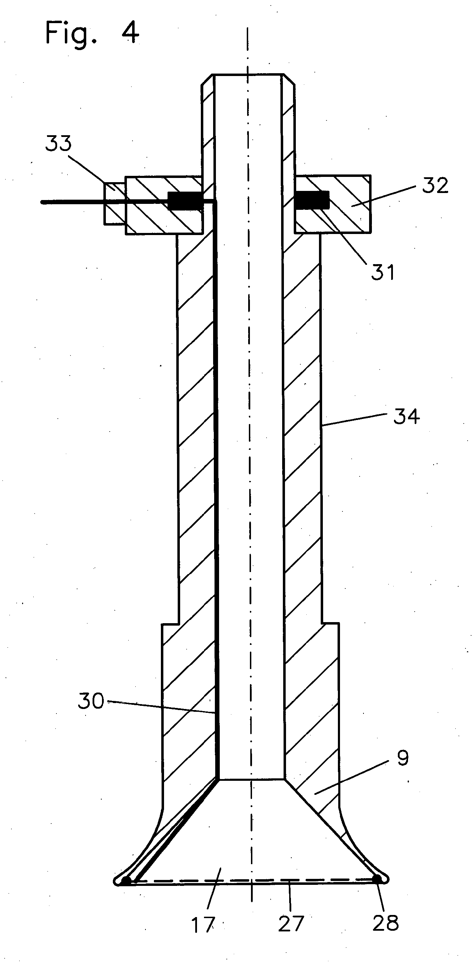

Die Übersichtansichten über die Anordnung der Komponenten gem. **Fig.1** **und** **2** ähneln im Aufbau dem in der DE 10 2007 013 938 A1 dargestellten Stand der Technik. Die Modifikationen werden anhand der Detaildarstellungen gem. **Fig.3a** **und b** und **Fig.4a und b** erläutert.

Die Schnittdarstellung gem. **Fig.2** offenbart die topographische Anordnung von zwei auf der Schnittebene **A - A** angeordneten Expositionskammern **1,** wobei die rechts angeordnete Expositionskammer mit dem vorgenannten Schwingquarz **5** auf einer zusätzlichen Masse **26** als Träger unterhalb der -Depositionsfläche **4** als Quarzmikrowaage ausgestattet für die Messung von Feinstpartikelmassen konzipiert ist. Der Schwingquarz **5** ist hierbei in eine Vertiefung der Masse **26** eingesetzt und wird von nicht weiter dargestellten, in der Masse integrierten Federn von unten gegen eine Ringmutterverschraubung gedrückt. Die Federn dienen zugleich der elektrischen Kontaktierung der Elektroden des Schwingquarzes. Vorzugsweise sind dann Masse und Ringmutterverschraubung aus einem elektrischen Isolator wie Kunststoff, beispielsweise Teflon gefertigt.

Die Ringmutterverschraubung begrenzt gemeinsam mit einer auf dieser aufgesetzten Krause **15** geometrisch die Durchströmungsvolumina, insbesondere im Bereich des Absaugvolumens **10** in der Weise geometrisch wie in der links angeordneten Expositionskammer die seitlichen vertikalen Flanken des Transwelleinsatzes **3.** Die Durchströmungsvolumina sind in jeden Fall geometrisch zueinander angepasst, werden durch Wandungen und Fluidführungen mit gleichen Topographien, vorzugsweise auch durch gleiche Materialoberflächen begrenzt und sind so weit wie irgend möglich identisch. Ein Oszillator **20** dient, der Ansteuerung und der Messdatenerfassung der Quarzmikrowaage.

Die Expositionskammern sind vorzugsweise von oben in Öffnungen einer Deckplatte **6** des Gehäuses **2** eingesetzt und parallel zueinander angeordnet. Sofern sie nicht mit einem Schwingquarz ausgestattet sind, weisen sie je einen Zulauf **7** und einen Ablauf **8** für ein Nährmedium je zu einem Nährmedienvolumen **21** unterhalb der Depositionsflächen zur Versorgung der die Depositionsflächen bildenden Zellkulturen auf. Der Ablauf **8** ist in der Expositionskammer **1** so angeordnet, dass er eine Ablaufkante bildet, damit einen gleich bleibenden Füllstand des Nährmediums im Nährmedienvolumen **21** sicherstellt und damit eine Benetzung und damit Versorgung der Zellkultur von unten stets sicherstellt.

**Fig.2** zeigt allerdings je einen Zu- und einen Ablauf pro dargestellter Expositionskammer, wobei die rechts dargestellte Expositionskammer mit Schwingquarz diese nicht selbst aufweist, sondern den Zu- und Ablauf für die dahinter angeordnete Expositionskammer ohne Schwingquarz darstellt (vgl. **Fig.1**).

Die Expositionskammer mit Schwingquarz gemäß **Fig.1** weist kein Nährmedienvolumen **21** aus. Der hierfür vorgesehene Platzbedarf wird für die Anordnung der Masse **26** benötigt. Die Depositionsflächen **4** auf dem Schwingquarz **5** sind damit auch nicht von unten für ein Nährmedium zugänglich. Aus diesem Grund bestehen die Depositionsflächen auf dem Schwingquarz aus einem vorzugsweise dämpfungsarmen Material mit einer Oberflächentopographie, die der einer Zellkulturoberfläche entspricht.

Ferner münden in jede Expositionskammer **1** von oben je eine Aerosolzuführung **9** aus. Diese leiten den Aerosolstrom über die Depositionsflächen und verursacht eine lokale Immission auf diesen, vorzugsweise von der Mitte der Depositionsfläche ausgehend vorzugsweise radial gleichmäßig nach außen hin verteilt. Von der Depositionsfläche wiederum wird der Aerosolstrom von einem in den Ringkanal **22** ausmündenden Absaugvolumen **10** (vgl. Schnittdarstellung **Fig.3a** **und b**) erfasst und abgeleitet. Vorzugsweise umfasst die Absaugung ein Ringkanal **22** mit einer Aerosolabsaugung **25** sowie einer Vielzahl von Durchbrüchen (Verbindungskanäle **18**) zum Absaugvolumen **10** im Deckel **11** um die Depositionsfläche zwecks radialer Absaugung des Aerosolstrom. Vorzugsweise sind Depositionsfläche, Aerosolzuführung und Absaugvolumen achsensymmetrisch gestaltet und konzentrisch zueinander angeordnet.

Die Depositionsflächen **4** aller Expositionskammern **1** erstrecken sich parallel zur Deckplatte **6** auf einer Ebene und sind nach Abheben eines Deckels **11** und der Aerosolzuführung **9** pro Expositionskammer von oben durch die Öffnungen der Deckplatte auch zugänglich. Zur Vermeidung eines Aerosolnebenstroms sind die Expositionskammern oben über je einen Dichtring **12** zwischen Deckel **11** und Deckplatte **6** abgedichtet. Die Deckel werden über eine Anpressplatte **13** auf die Expositionskammern **1** gepresst. Die Anpressplatte wird auf in das, Gehäuse **2** eingesetzte Bundbolzen **14** geführt und in der Position über nicht dargestellte Schnellverschlüsse fixiert.

**Fig.3a** **und b,** **Fig.4** sowie **Fig.5a** **und b** geben die Schnittdarstellungen der in **Fig.2** gezeigten modifizierten Expositionskammern im Detail wieder. Die Expositionskammern weisen jeweils ein Gitter **27** im der dargestellten Ausführung parallel über den Depositionsflächen **4** auf, die den gesamten Auslassbereich **17** der jeweiligen Aerosolzuführung **9** überspannen.

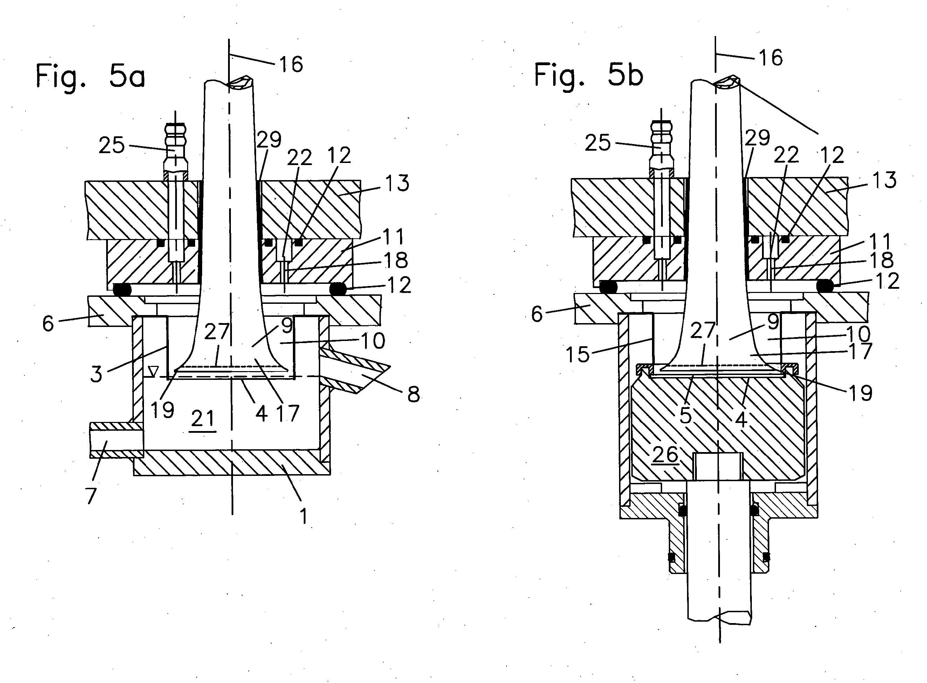

**Fig.3a** **und** **5a** zeigen je eine Expositionskammer ohne Mikrowaage. Die Depositionsfläche **4** erstreckt sich jeweils auf den Bodenbereich des Transwelleinsatzes **3,** der von oben in die Expositionskammer **1** eingesetzt ist und durch einen nach außen gebogenen und unter Deckel eingreifenden Becherrand zentriert und gehalten wird. Der Zulauf **7** für ein Nährmedium mündet unterhalb der Depositionsfläche (d.h. den Zellkulturen) in das Nährmedienvolumen **21** ein, benetzt dort von unten die gesamte Depositionsfläche **4** und verlässt das Volumen über den Ablauf **8.** Die Feinstpartikelmassen werden als Aerosol von oben durch die mittig um die Symmetrieachse **16** angeordnete Aerosolzuführung **9** auf die Depositionsfläche **4** geleitet. Das Innere des Transwelleinsatzes **3** außerhalb des sich nach unten hin zunehmend aufweitenden Auslassbereichs **17** der Aerosolzuführung **9** bildet das ringförmig konzentrisch um diesen angeordnete Absaugvolumen **10,** umfassend eine Vielzahl von konzentrisch um die Aerosolzuführung angeordneten und in das ringförmige Kanalsystem **22** ausmündenden Verbindungskanälen **18.** Der Auslassbereich **17** erweitert sich dabei nach unten hin konisch oder - wie dargestellt - bevorzugt aber trompetenförmig und bildet in seinem gesamten Umfang mit der Depositionsfläche **4** einen umlaufenden Ringspalt **19** gleich bleibender Breite.

Je eine Expositionskammer, ausgestattet mit einem Schwingquarz **5** als Messaufnehmer einer Quarzmikrowaage zeigen **Fig.3b** **und** **5b****.** Der Bereich oberhalb der Depositionsfläche **4** ist in seinem Aufbau, seinen Abmessungen und Funktionsweise identisch zu der vorgenannten und in **Fig.3a** **und** **5a** gezeigten Expositionskammer ohne Mikrowaage. Die Depositionsfläche wird vorzugsweise durch die Oberfläche des Schwingquarzes **5** gebildet, der wiederum das Volumen unterhalb der Depositionsfläche ausfüllt und von unten mit dem Oszillator **20** verbunden ist (vgl. **Fig.2**).

**Fig.3a** **und b** repräsentieren dabei eine Ausführung, bei der nur am Gitter **27** jeweils ein Potential mit einem Potentialunterschied von mindestens 200 Volt, vorzugsweise den vorgenannten Potentialunterschieden zum Potential der Depositionsflächen **4** anliegt. Das Gitter wird in der Aerosolzuführung **9** durch einen elektrisch isolierenden Ring **28,** vorzugsweise aus einem Kunststoff, Elastomer oder einem Glas in der Aerosolführung gehalten.

Der elektrische Anschluss des Gitters erfolgt vorzugsweise über ein Hochspannungskabel, das vorzugsweise oberhalb der Anpressplatte **13** über eine isolierte Hochspannungsdurchführung in die Aerosolzuführung eingeführt wird und in dieser nach unten zum Gitter geleitet wird.

Eine bevorzugte Ausgestaltung umfasst, wie in **Fig.4** dargestellt, eine trompetenförmige Aerosolzuführung **9** aus elektrisch geerdetem Edelstahl mit dem Gitter **27** aus Stahl als Aufsatz am Aerosolaustritt **17.** Zwischen Aerosolzuführung und Stahlgitter ist ein isolierender Ring **28** aus Polypropylen oder Teflon eingesetzt. Dieser verhindert einen Kurzschluss zwischen der auf Erdpotential gelegten und vorzugsweise auch elektrisch mit der Depositionsfläche verbundenen Aerosolzuführung, und Hochspannung führendem Gitter. Eine Hochspannungsversorgung des Gitters erfolgt vorzugsweise durch ein bis kurz vor dem Gitter isoliertes. Kabel **30** in einer Nut auf der Innenseite der Aerosolzuführung über den Isolierring hinweg zum Gitter. Am oberen Ende der Aerosolzuführung kontaktiert die Litze des Kabels einen umlaufenden Ring **31** in einer aufschraubbaren Hülse **32** an der sich eine Steckverbindung **33** zum Anschluss an die nicht weiter dargestellte Hochspannungsversorgung befindet. Eine Nut alternativ auf der Außenseite der wäre zwar einfacher zu fertigen, birgt aber das Risiko, dass anschließend Schwierigkeiten bei der Dichtigkeit der Expositionskammer im Gehäuse der Vorrichtung (insbesondere zwischen der Anpressplatte oder Deckel und Aerosolzuführung **9** an der Dichtfläche **34**) auftreten, da die Litze in der Nut eine Unterbrechung in der Dichtfläche **34** des Dichtrings **12** (vgl. **Fig.3a** **und b**) verursacht.

**Fig. 5a** **und b** zeigen dagegen Ausführungen, bei der das Gitter **27** elektrisch leitend mit der Aerosolzuführung **9** verbunden ist. Gemeinsam an Gitter und Aerosolzuführung liegt jeweils ein Potential mit einem Potentialunterschied von mindestens 200 Volt, vorzugsweise den vorgenannten Potentialunterschieden zum Potential der Depositionsflächen **4** an. Dies erfordert im Falle einer elektrisch leitfähigen Aerosolzuführung wiederum eine elektrische isolierende und zwingend dichtende Aufhängung der Aerosolzuführung im Gehäuse der Vorrichtung, wie beispielhaft dargestellt mittels einer Isolationshülse **29,** vorzugsweise aus einem Kunststoff oder einem Elastomer.

Eine spezielle Ausgestaltung der letztgenannten Ausführungen sieht eine Aerosolzuführung mit einer elektrisch nicht leitfähigen Innenoberfläche vor, in der ein elektrisch leitfähiger rohrförmiger Einsatz mit Gitter eingeschoben ist, der sich in der Aerosolführung vom Auslassbereich, d.h. der Position des Gitters bis außerhalb der Vorrichtung erstreckt und dort über eine Hochspannungsversorgung wie **Fig.4** beschrieben an eine Hochspannungsversorgung angeschlossen ist. Ist der Einsatz abseits des Gitters mit einer Isolation versehen, liegt eine Ausgestaltung der in **Fig.3a** **und b** beschriebenen Ausführungen vor. Ist der komplette rohrförmige Einsatz mit Gitter unisoliert in der Aerosolführung eingesetzt, entspricht die Ausgestaltung der in **Fig.5a** **und b** beschriebenen Ausführungen.

Gitter und Depositionsfläche bilden die Elektroden zur Ausbildung eines elektrischen Feldes. Sind diese parallel zueinander angeordnet, bildet sich ein homogenes elektrisches Feld über die gesamte Erstreckung des Gitters und der Depositionsfläche aus.

Bei der konstruktiven Auslegung der Vorrichtung, insbesondere der elektrischen Kontakte und Felder folgendes zu beachten:
- Vermeidung eines Kurzschlusses zwischen Aerosolzuführung und Deckel, der geerdet bleiben soll.
- Keine offenen Kontakte mit der Hochspannung (umfassend die vorgenannten Intervalle z.B. von bevorzugt 200 bis 10000 Volt, bevorzugt im kV-Bereich).
- Optimaler Weise keine Änderung der äußeren Geometrie, so dass die variable Einsetzbarkeit in allen Positionen eines Moduls, umfassend Aerosolzuführung mit Gitter sowie Depositionsfläche mit oder ohne Schwingquarz erhalten bleibt.
- Dichtigkeit zwischen Deckel und Aerosolführung ist zwingend erforderlich.
- Vermeidung von großen Flächen aus elektrostatisch aufladbaren Materialien wie Teflon um keine zusätzlichen Verluste zu verursachen. Damit ist z.B. eine Teflon-Aerosolzuführung ohne weitere Maßnahmen zur Ableitung von elektrischen Ladungen nachteilhaft, da sonst die Aerosole bereits schon zwischen Gitter und der Depositionsfläche bzw. der Elektrode des Schwingkristalls verändert wären und das Messergebnis einer Abscheidung beeinflussen würde.

Eine Abscheidung von Partikelfraktionen lässt sich weiterhin durch einen Temperaturunterschied zwischen den Partikeln im Aerosol und den Depositionsflächen selektiv beeinflussen. Durch eine Erwärmung der Depositionsfläche lassen sich beispielsweise bestimmte Fraktionen auf diesen leichter verdampfen. Außerdem beeinflusst die Temperatur signifikant die Dynamik der physikalischen, chemischen und biologischen Wechselwirkungen zwischen abgeschiedenen Partikeln und Depositionsflächen und damit die Abscheidungskinetiken einzelner Partikelfraktionen selektiv.

Alternative Mittel zur Kühlung der Depositionsfläche und/oder zur Erwärmung der Partikel im Aerosol (z.B. durch eine der Aerosolzuführung vorgeschalteten Vorrichtung) bewirken eine Überströmung von wärmeren Partikelmassen über eine kältere Depositionsfläche. Damit kondensieren sich bevorzugt auch gasförmige Bestandteile auf der Depositionsfläche.

Wird die Vorrichtung für die eingangs genannten In-Vitro-Analysen von Feinststaubablagerungen (Staub, Pharmazeutika, Drogen, sonst. Wirkstoffe, Sporen, Viren oder Bakterien etc.) oder biochemischer oder biophysikalischer Wechselwirkungen auf Bioassays, d.h. auf biologischen oder biologisch aktiven Oberflächen, genutzt, bestehen die Depositionsflächen bevorzugt aus einem Biofilm oder einer Zellkultur.

Für die Sicherstellung einer gleich bleibenden Temperatur z.B. 37°C für die vorgenannten In-Vitro-Analysen wie z.B. auch toxikologische Anwendungen in allen Expositionskammern ist das Gehäuse über einen Zulauf und einen Ablauf für die Temperierung **23** bzw. **24** mit einem Temperiermedium, z.B. Wasser oder Öl flutbar (vgl. **Fig. 1**). Das Temperiermedium füllt das Innenvolumen des Gehäuses aus, wobei für eine bevorzugt selektive Temperierung der Depositionsflächen (indirekt über das Nährmedium im Nährmedienvolumen **21** oder der Masse **26**) der Flüssigkeitsspiegel des Temperiermediums vorzugsweise auf Höhe der Depositionsflächen eingestellt wird (vgl. gestrichelte horizontale Linie in **Fig.2****)** .

### Bezugszeichenliste

- 1: Expositionskammer
- 2: Gehäuse
- 3: Transwelleinsatz
- 4: Depositionsfläche
- 5: Schwingquarz
- 6: Deckplatte
- 7: Zulauf für Nährmedium
- 8: Ablauf für Nährmedium
- 9: Aerosolzuführung
- 10: Absaugvolumen
- 11: Deckel
- 12: Dichtring
- 13: Anpressplatte
- 14: Bundbolzen
- 15: Krause
- 16: Symmetrieachse
- 17: Auslassbereich
- 18: Verbindungskanal
- 19: Ringspalt
- 20: Oszillator
- 21: Nährmedienvolumen
- 22: Ringkanal
- 23: Zulauf für Temperierung
- 24: Ablauf für Temperierung
- 25: Aerosolabsaugung
- 26: Masse
- 27: Gitter
- 28: Isolationsring
- 29: Isolationshülse
- 30: Isoliertes Kabel
- 31: umlaufender Ring
- 32: Hülse
- 33: Steckverbindung
- 34: Dichtfläche

## Patentansprüche

1. Vorrichtung zur Messung von Feinstpartikelmassen, umfassend ein Expositionssystem mit mindestens zwei Messkammern **(1)** mit identischen Geometrien, umfassend jeweils eine Depositionsfläche **(4)** für Partikel mit je einer auf diese gerichtete Aerosolzuführung **(9)** mit einem Auslassbereich **(17)** für die Zuführung eines Aerosols auf die Depositionsfläche, wobei mindestens eine der Depositionsflächen auf einem Schwingquarz **(5)** als Feinstwaage ausgeführt sind, sowie Mittel zur Erzeugung eines Potentialunterschieds zwischen den Partikeln im Gas und den Depositionsflächen, wobei die Auslassbereiche **(17)** jeweils einen aufgeweiteten Auslassquerschnitt aufweist, der über seinen gesamten Umfang einen konstanten Abstand zur Depositionsfläche **(4)** aufweist und eine umlaufende Spaltdüse **(19)** bildet sowie die Absaugvolumen konzentrisch um die Aerosolzuführung angeordnet ist,
**dadurch gekennzeichnet, dass**
a) an den Depositionsflächen jeweils ein Potential entsprechend Erdpotential anliegt,
b) über den Depositionsflächen jeweils ein Gitter angeordnet ist, die die jeweiligen Auslassbereiche vollständig überspannen sowie
c) an den Gittern jeweils ein Potential mit einem Potentialunterschied von mindestens 200 V zum Potential der Depositionsflächen anliegt, wobei zwischen den Gittern und den jeweiligen Depositionsflächen sich ein elektrisches Feld aufspannt

2. Vorrichtung nach Anspruch 1, **dadurch gekennzeichnet, dass** mindestens eine andere Depositionsfläche ohne Schwingquarz ausgeführt sind.

3. Vorrichtung nach Anspruch 1 oder 2, **dadurch gekennzeichnet, dass** die Mittel eine der Aerosolzuführung **(9)** vorgeschaltete Vorrichtung zur Ionisierung der Partikel im Aerosol umfassen.

4. Vorrichtung nach einem der vorgenannten Ansprüche, **dadurch gekennzeichnet, dass** die Gitter jeweils parallel zu den jeweiligen Depositionsflächen angeordnet sind.

5. Vorrichtung nach einem der vorgenannten Ansprüche, **dadurch gekennzeichnet, dass** an den Gittern jeweils das Potential der jeweiligen Aerosolzuführung anliegt.

6. Vorrichtung nach einem der vorgenannten Ansprüche, **dadurch gekennzeichnet, dass** eine Umlenkung des Aerosols über den Depositionsflächen **(4)** vorgesehen ist.

7. Vorrichtung nach einem der vorgenannten Ansprüche, **dadurch gekennzeichnet, dass** ein Absaugvolumen **(10)** um die Aerosolzuführung **(9)** angeordnet ist.

8. Vorrichtung nach einem der vorgenannten Ansprüche, **dadurch gekennzeichnet, dass** der Auslassbereich **(17)** um eine Symmetrieachse **(16)** rotationssymmetrisch ist und sich trompetenförmig oder konisch erweitert.

9. Vorrichtung nach einem der vorgenannten Ansprüche, **dadurch gekennzeichnet, dass** Mittel zur Erzeugung eines Temperaturunterschieds zwischen den Partikeln im Gas und den Depositionsflächen **(4)** vorgesehen ist.

10. Vorrichtung nach Anspruch 9, **dadurch gekennzeichnet, dass** die Mittel eine Kühlung für die Depositionsfläche **(4)** und/oder eine der Aerosolzuführung **(9)** vorgeschaltete Vorrichtung zur Erwärmung der Partikel im Aerosol umfassen.

11. Vorrichtung nach einem der vorgenannten Ansprüche, **dadurch gekennzeichnet, dass** die Depositionsflächen **(4),** die nicht auf einem Schwingquarz **(5)** angeordnet sind, durch einen Biofilm oder eine Zellkultur gebildet wird.

## Claims

1. Device for measuring superfine particle masses, comprising an exposure system with at least two measurement chambers (1) with identical geometries, each comprising a deposition surface (4) for particles each having an aerosol delivery device (9) directed towards it, with an outlet region (17) for the delivery of an aerosol onto the deposition surface, wherein at least one of the deposition surfaces is arranged on a quartz oscillator (5) as a superfine scales, as well as means for producing a difference in potential between the particles in the gas and on the deposition surfaces, wherein the outlet regions (17) exhibit in each case an extended outlet cross-section, which exhibits over its entire circumference a constant distance interval from the deposition surface (4), and forms a circumferential slot nozzle (19), and the suction volume is arranged concentrically around the aerosol delivery, **characterised in that**
a) in each case, a potential is imposed on the deposition surfaces which corresponds to earth potential,
b) in each case, a lattice is arranged over the deposition surfaces which extends entirely over the respective outlet areas, and
c) in each case, a potential is imposed at the lattices with a difference in potential of at least 200 V in respect of the potential of the deposition surfaces, wherein an electrical field extends between the lattices and the respective deposition surfaces.

2. Device according to claim 1, **characterised in that** at least one other deposition surface is configured without a quartz oscillator.

3. Device according to claim 1 or 2, **characterised in that** the means comprise a device upstream of the aerosol delivery device (9) for ionising the particles in the aerosol.

4. Device according to any one of the preceding claims, **characterised in that** the lattices are arranged, in each case, parallel to the respective deposition surfaces.

5. Device according to any one of the preceding claims, **characterised in that** in each case the potential of the respective aerosol delivery device is imposed at the lattices.

6. Device according to any one of the preceding claims, **characterised in that** provision is made for a deflection of the aerosol over the deposition surfaces (4).

7. Device according to any one of the preceding claims, **characterised in that** a suction volume (10) is arranged around the aerosol delivery device (9).

8. Device according to any one of the preceding claims, **characterised in that** the outlet region (17) is rotationally symmetrical about an axis of symmetry (16) and broadens out in the form of a trumpet or conically.

9. Device according to any one of the preceding claims, **characterised in that** means are provided for producing a temperature difference between the particles in the gas and on the deposition surfaces (4),

10. Device according to claim 9, **characterised in that** the means comprise a cooling arrangement for the deposition surface (4) and/or a device upstream of the aerosol delivery device (9) for heating the particles in the aerosol.

11. Device according to any one of the preceding claims, **characterised in that** the deposition surfaces (4) which are not arranged on a quartz oscillator (5) are formed by a biofilm or a cell culture..

## Revendications

1. Dispositif pour mesurer la masse de particules fines comprenant un système d'exposition ayant au moins deux chambres de mesure (1) de géométries identiques, comprenant une surface de dépôt (4) pour les particules avec une alimentation en aérosol (9) orientée vers celle-ci et ayant une zone de sortie (17) pour fournir l'aérosol à la surface de dépôt, au moins l'une des surfaces de dépôt étant réalisée sur un quartz oscillant (5) comme balance de précision ainsi que des moyens pour générer une différence de potentiel entre les particules contenues dans le gaz et les surfaces de dépôt, la zone de sortie (17) ayant une section de sortie élargie respective dont toute la périphérie est à une distance constante de la surface de dépôt (4) et forme une buse de séparation (19) périphérique, et le volume d'aspiration est concentrique autour de l'alimentation en aérosol,
**caractérisé en ce que**
a) un potentiel correspondant au potentiel de la masse est appliqué aux surfaces de dépôt respectives,
b) une grille est prévue au-dessus des surfaces de dépôt respectives, cette grille chevauchant complètement les zones de sortie respectives, et
c) un potentiel est appliqué aux grilles, ce potentiel correspondant à une différence de potentiel d'au moins 200 V par rapport au potentiel des surfaces de dépôt, un champ électrique s'établissant entre les grilles et les surfaces de dépôt respectives.

2. Dispositif selon la revendication 1,
**caractérisé en ce qu'**
au moins une autre surface de dépôt est réalisée sans quartz oscillant.

3. Dispositif selon la revendication 1 ou 2,
**caractérisé en ce que**
les moyens comprennent un dispositif en amont de l'alimentation en aérosol (9) pour ioniser les particules de l'aérosol.

4. Dispositif selon l'une des revendications précédentes,
**caractérisé en ce que**
les grilles sont respectivement parallèles aux surfaces de dépôt respectives.

5. Dispositif selon l'une quelconque des revendications précédentes,
**caractérisé en ce que**
les grilles sont respectivement au potentiel de l'alimentation respective d'aérosol.

6. Dispositif selon l'une quelconque des revendications précédentes,
**caractérisé par**
une déviation de l'aérosol au-dessus des surfaces de dépôt (4).

7. Dispositif selon l'une quelconque des revendications précédentes,
**caractérisé en ce qu'**
un volume aspirant (10) entoure l'alimentation en aérosol (9).

8. Dispositif selon l'une quelconque des revendications précédentes,
**caractérisé en ce que**
la zone de sortie (17) est symétrique en rotation autour d'un axe de symétrie (16) et s'élargit suivant une forme de trompette ou une forme conique.

9. Dispositif selon l'une quelconque des revendications précédentes,
**caractérisé en ce que**
des moyens sont prévus pour générer une différence de température entre les particules contenues dans le gàz et les surfaces de dépôt (4).

10. Dispositif selon la revendication 9,
**caractérisé en ce que**
les moyens comportent un refroidissement pour la surface de dépôt (4) et/ou un dispositif en amont de l'alimentation en aérosol (9) pour chauffer les particules contenues dans l'aérosol.

11. Dispositif selon l'une quelconque des revendications précédentes,
**caractérisé en ce que**
les surfaces de dépôt (4) qui ne sont pas sur un quartz oscillant (5) sont constituées par un film bio ou une structure cellulaire.
